**Europäisches Patentamt**

**European Patent Office**

**Office européen des brevets**

(19)

(11) Veröffentlichungsnummer: **0 432 643 A1**

## (12) EUROPÄISCHE PATENTANMELDUNG

(21) Anmeldenummer: **90123422.9**

(22) Anmeldetag: **06.12.90**

(51) Int. Cl.5: **A47K 11/02**

(30) Priorität: **14.12.89 DE 3941304**

(43) Veröffentlichungstag der Anmeldung:
**19.06.91 Patentblatt 91/25**

(84) Benannte Vertragsstaaten:
**AT BE CH DE DK ES FR GB GR IT LI LU NL SE**

(71) Anmelder: **Löbbert, Johannes**
**Industriestrasse 1**
**W-4405 Nottuln 2(DE)**

(72) Erfinder: **Löbbert, Johannes**
**Industriestrasse 1**
**W-4405 Nottuln 2(DE)**

(74) Vertreter: **Hoffmeister, Helmut, Dr. Dipl.-Phys.**
**Patentanwalt Goldstrasse 36**
**W-4400 Münster(DE)**

(54) **Trockentoilette.**

(57) Die Erfindung betrifft eine Trockentoilette mit verschließbaren Behältern zur Aufnahme der Fäkalien.

Es soll vermieden werden, daß die Benutzer der Toilette unangenehme und hygienisch bedenkliche Handgriffe ausführen.

Die Trockentoilette besitzt folgenden Einzelheiten:

Einen mittels einer Antriebsvorrichtung (1) um eine vertikale Achse schrittweise jeweils um 360/n Grad rotierbaren Drehsitz (2) mit n Vertiefungen (3) zur Aufnahme jeweils eines Behälters (4), wobei mindestens und vorzugsweise n = 4 ist und die Vertiefungen in den Ruhepositionen des Drehsitzes, nacheinander folgende Positionen einnehmen:

- eine erste Position, in der ein erstes Magazin zur Aufnahme eines Vorrats an unbenutzten Behältern (4) vorgesehen ist, das mit einer Einrichtung (6) zur Abgabe einzelner Behälter (4) ausgestattet ist,
- eine zweite Position, die als Benutzungsposition dient,
- eine dritte Position, in der ein zweites Magazin (7) zur Aufnahme eines Vorrats von Deckeln (8) zum Verschließen der benutzten Behälter vorgesehen ist, das mit einer Einrichtung (9) zur Abgabe einzelner Deckel ausgestattet ist, und
- eine vierte Position, die als Entnahmeposition dient und in der ein Roboterarm (10) vorgesehen ist, der nach Auflegen eines Deckels auf den benutzten Behälter den verschlossenen Behälter der Vertiefung entnimmt und einer Ablage (11) zuführt.

EP 0 432 643 A1

## TROCKENTOILETTE

Die Erfindung betrifft eine Trockentoilette zur Verwendung mit verschließbaren Behältern zur Aufnahme der Fäkalien.

Trockentoiletten werden dort eingesetzt, wo kein Wasseranschluß und keine Abflußmöglichkeiten zur Verfügung stehen, die beim Betrieb einer üblichen Toilette benötigt werden. Sie kommen vorzugsweise in Reisebussen, auf Schiffen, in Flugzeugen und beim Camping zum Einsatz.

Eine Trockentoilette der eingangs genannten Art ist aus der US-PS 3 772 712 bekannt. Bei dieser Toilette besteht der Behälter aus einem äußeren formstabilen, verschließbaren Karton oder dergl., in dem sich ein flexibler Beutel befindet. Der flexible Beutel ragt aus dem Karton heraus und wird mit seinem oberen über einem Toilettensitz gezogen. Nach der Benutzung wird der Beutel durch ein mittels einer geeigneten Vorrichtung erzeugtes Vakuum zusammengezogen, und danach wird der umgebende Karton verschlossen.

Nachteilig erfordert die bekannte Vorrichtung in erheblichem Umfang eine Mitarbeit des Benutzers, um einen störungsfreien Gebrauch sicherzustellen. So müssen die Behälter von Hand eingelegt und an die Vakuumleitung angeschlossen werden. Weiterhin ist es erforderlich, daß der Benutzer nach dem Zusammenziehen des Beutels den Karton von Hand verschließt und ihn der Toilette entnimmt, um ihn zu entsorgen. Bei einem Einsatz der Toilette im öffentlichen Bereich ist nicht sichergestellt, daß jeder Benutzer die notwendigen Handgriffe ausführt und so einem späteren Benutzer eine gebrauchsfertige Vorrichtung hinterläßt.

In der DE-PS 468 100 wird auf eine Trockentoilette mit einem Sitz hingewiesen, bei dem ein Gefäß vorhanden ist, das unten mit einer Klappe abgeschlossen ist. In dieses Gefäß ist ein Sack aus wasserdichtem Papier oder dergleichen eingesetzt. Nachteilig ist, daß der Sack aus dem Behälter mit einem an der unteren Klappe angebrachten Haken, der in eine auf der unteren Fläche des Sackes angebrachten Schnur greift, herausgezogen werden muß und in einen offenen Behälter fällt. Die herfür erforderlichen Manipulationen sind für eine Toilette für den Allgemeingebruach nicht geeignet.

Bekannt ist weiterhin eine Trockentoilette aus der DE-PS 880 920. Diese Toilette besitzt einen Behälter, der zum Verschließen der Klosettschüssel Deckel in gestapelter Form aufnimmt. Eine zusätzliche Einrichtung ist vorgesehen, um den benutzten Behälter mit dem Deckel zu verschließen. Dabei ist aber nötig, daß eine Druckfeder vorhanden sein muß, die die Deckel aus dem Behälter hochdrückt, die dann danach durch die durch Hand betätigte und aus vielen Einzelteilen bestehende Vorrichtung auf den Behälter gedrückt wird.

Beide Lösungen sind wegen ihrer Ausführungsform und den damit zusammenhängenden Nachteilen nicht für den Einsatz in einer benutzerfreundlichen und hygienischen Toilette zu verwenden, bei der einzelne Aufnahmebeutel oder -behälter eingesetzt werden.

Es ist Aufgabe der vorliegenden Erfindung, diese Nachteile des Standes der Technik zu vermeiden und eine Trockentoilette zu schaffen, die einen störungsfreien Betrieb gewährleistet, ohne daß der Benutzer den benutzten Be hälter verschließen, ihn entsorgen und einen neuen Behälter einlegen muß. Die Vorrichtung soll also mittels geeigneter Einrichtungen und Antriebsaggregate automatisch arbeiten und jedem Benutzer eine gebrauchsfertige, hygienische Toilette zur Verfügung stellen.

Diese Aufgabe wird erfindungsgemäß bei einer Trockentoilette der eingangs genannten Art gelöst durch

- einen mittels einer Antriebsvorrichtung um eine vertikale Achse schrittweise jeweils um 360/n Grad rotierbaren Drehsitz mit n Vertiefungen zur Aufnahme jeweils eines Behälters, wobei mindestens und vorzugsweise n = 4 ist, und die Vertiefungen in den Ruhepositionen des Drehsitzes nacheinander folgende Positionen einnehmen :
  - eine erste Position, in der ein erstes Magazin zur Aufnahme eines Vorrats von unbenutzten Behältern vorgesehen ist, das mit einer Einrichtung zur Abgabe einzelner Behälter ausgestattet ist,
  - eine zweite Position, die als Benutzungsposition dient,
  - eine dritte Position, in der ein zweites Magazin zur Aufnahme eines Vorrats von Deckeln zum Verschließen der benutzten Behälter vorgesehen ist, das mit einer Einrichtung zur Abgabe einzelner Deckel ausgestattet ist, und
  - eine vierte Position, die als Entnahmeposition dient und in der ein Roboterarm vorgesehen ist, der nach Auflegen eines Deckels auf den benutzten Behälter den verschlossenen Behälter der Vertiefung entnimmt und einer Ablage zuführt.

Durch die genannte Einrichtung ist ein automatischer Betrieb der erfindungsgemäßen Trockentoilette gewährleistet. Der Benutzer braucht keine unangenehmen und unhygienischen Handgriffe auszuführen. Es sind nur in Abständen Wartungsarbeiten erforderlich, bei denen die Magazine mit neuen Behältern und Deckeln aufgefüllt werden und die Ablage entleert wird.

Das Prinzip der erfindungsgemäßen Trooken-toilette besteht also darin, das ein rotierbarer Drehsitz vorzugsweise vier Vertiefungen zur Aufnahme jeweils eines Fäkalienbehälters aufweist. Die Vertiefungen erreichen nacheinander durch die Rotation des Drehsitzes ein Behältermagazin, von dem ein leerer Behälter abgegeben wird, die Benutzungsposition, ein Deckelmagazin, von dem ein Deckel zum Verschließen des benutzten Behälters abgegeben wird, und die Entnahmeposition, in der ein Roboterarm den mit einem Deckel versehenen Behälter ergreift und einer Ablage zuführt.

Die Behälter sind vorzugsweise Beutel aus einer flexiblen Schlauchfolie, die an ihrem offenen Ende einen sich nach außen erstreckenden festen Kragenrand aufweisen. Diese Gestaltung weist erhebliche Vorteile für ihre Benutzung bei der erfindungsgemäßen Trockentoilette auf. Die flexible Schlauchfolie ermöglicht eine platzsparende Aufbewahrung in dem Behältermagazin, in dem die Folie flach zusammengelegt vorliegt. Sie erlaubt auch eine platzsparende Ablage, da sie auf ein relativ kleines Volumen zusammendrückbar ist. Der feste Kragenrand erlaubt eine günstige Handhabung im Magazin und erleichtert die Abgabe jeweils eines Behälters durch entsprechende mechanische Einrichtungen. Der Kragen ermöglicht ferner eine zuverlässige Festlegung des Behälters in der Vertiefung des Drehsitzes und erleichtert weiterhin das Auflegen eines dichtschließenden Deckels. Der Dekkel ist vorteilhaft so ausgebildet, daß er den äußeren Rand des Kragens dicht umgreift. Es ist also möglich, den Deckel durch entsprechende Einrichtungen des Deckelmagazins fest auf den Kragen des Behälters zu drücken. Es ist aber auch möglich, den Deckel in der Position des Deckelmagazins zunächst lose aufzulegen und ihn in der folgenden Position durch den Roboterarm fest aufzudrücken, bevor dieser den verschlossenen Behälter ergreift und der Ablage übergibt.

Vorteilhaft ist die Einrichtung zur Abgabe einzelner Behälter ein Träger, der geeignet ist, in einer Halteposition, den untersten Behälter des in dem Magazin befindlichen Vorrats von Behältern zu tragen, aus dieser Position in eine Freiga250si-tion bewegbar und nach Freigabe eines Behälters zurück in die Halteposition bewegbar ist. Die Einrichtung ist also so gestaltet, daß jeweils nur ein Behälter in die Vertiefung abgegeben wird, die in der Entnahmeposition durch den Roboterarm entleert worden ist und durch die Rotation des Drehsitzes in eine mit dem Behältermagazin fluchtende Position gebracht worden ist.

Zur Verwendung mit den beschriebenen, einen festen Kragen aufweisenden Folienbehältern weist die Trockentoilette vorteilhaft eine Blasvorrichtung auf, die nach Abgabe eines Behälters den Schlauchbeutel durch Aufblasen entfaltet. Die Blasvorrichtung kann irgendeine Vorrichtung sein, die durch einen geeigneten Überdruck den Folienbeutel zum Gebrauch entfaltet. Es kann sich also um ein Gebläse oder einen Druckbehälter handeln, der mit Luft oder irgendeinem geeigneten Gas den Behälter, der in zusammengelegter Form aus dem Magazin abgegeben wird, aufbläst.

Die Einrichtung zur Abgabe einzelner Deckel ist vorteilhaft als Träger ausgebildet, der geeignet ist, in einer Halteposition den untersten Deckel des in dem Magazin befindlichen Vorrats von Deckeln zu tragen, aus dieser Position in eine Freigabeposition bewegbar und nach Freigabe eines Deckels zurück in die Halteposition bewegbar ist. Im Prinzip arbeitet diese Einrichtung also so wie die Einrichtung zur Abgabe der Behälter. Wesentlich ist es, daß jeweils nur ein Deckel freigegeben wird und die übrigen Deckel im Magazin zurückgehalten werden

Ebenso wie bei der Einrichtung zur Abgabe der Behälter kann bei der Einrichtung zur Abgabe der Deckel der Träger in Form mehrerer vor- und zurückbewegbarer Stifte oder flacher Zungen ausgebildet sein, die unter den zu haltende Behälter bzw. Deckel greifen. Es ist auch möglich, daß diese Einrichtungen aus kreisförmigen Halterungen bestehen, die ihrerseits aus zwei oder mehreren Teilen bestehen, die in der Halteposition unter den zu tragenden Behälter bzw. Deckel greift und in der Freigabeposition unter Erweiterung des Umfangs nach außen bewegt sind und so den Behälter oder den Deckel freigeben.

Die Rotation des Drehsitzes und die Funktion der übrigen Teile kann nach der Benutzung vom Benutzer durch Betätigung eines Schalters oder dergleichen ausgelöst werden. Vorteilhaft weist die erfindungsgemäße Trockentoilette jedoch eine Lichtschranke oder Sensoreinrichtung auf, die in Verbindung mit einer Schaltung nach der Benutzung eine Rotation des Drehsitzes um 360 n Grad, die Abgabe eines neuen Behälters und eines Dek-kels sowie die Entnahme des benutzten Behälters durch den Roboterarm auslöst. Hierdurch wird ein automatischer Betrieb gewährleistet, der unabhängig von der Einwirkung des Benutzers abläuft.

Die Trockentoilette weist vorteilhaft eine Abflußöffnung der Vertiefungen auf, die in der Benutzungspostion in einen Auffangbehälter mündet. Hierdurch wird ein Betrieb auch dann sichergestellt, wenn ein Behälter defekt sein sollte oder bei mangelhafter Wartung nicht genügend Behälter vorrätig sind.

Um die Ablage für die benutzten Behälter optimal auszunutzen, weist die Trockentoilette vorteilhaft eine Preßeinrichtung auf, die in der Ablage eine Komprimierung des gesamten Abfalls ermöglicht. Diese Preßeinrichtung, die ähnlich wie eine Müllpresse oder dergleichen arbeiten kann, reduziert das Volumen der abgelegten Behälter erheblich und trägt so zum wirtschaftlichen und umweltfreundlichen Betrieb bei.

Im folgenden wird ein Ausführungsbeispiel der Erfindung anhand der Zeichnung näher erläutert.

Es zeigen

Figur 1 eine teilweise geschnittene Vorderansicht der Trockentoilette,

Figur 2 eine Draufsicht der Trockentoilette,

Figur 3 einen um 90° gedrehten Schnitt entlang der Linie A - B in Figur 2,

Figur 4 einen um 90° gedrehten Schnitt entlang der Linie C - D in Figur 2,

Figur 5 einen um 90° gedrehten Schnitt entlang der Linie E - F in Figur 2 und

Figur 6 einen Schnitt entlang der Linie G - H in Figur 1.

In den Figuren sind bezeichnet mit

1 die Antriebsvorrichtung,
2 der Drehsitz,
3 die Vertiefungen,
4 die Behälter,
5 das Magazin für die Behälter,
6 die Einrichtung zur Abgabe von Behältern,
7 das Magazin für die Deckel,
8 die Deckel,
9 die Einrichtung zur Abgabe von Deckeln,
10 der Roboterarm,
11 die Ablage,
12 die Träger für die Behälter,
13 die Blasvorrichtung,
14 die Träger für die Deckel,
15 die Lichtschranke,
16 die Abflußöffnung,
17 der Auffangbehälter,
18 weitere Halter für die Deckel,
19 seitliche Türen,
20 die Kabine,
21 seitliche Blenden und
22 eine Abdeckplatte.

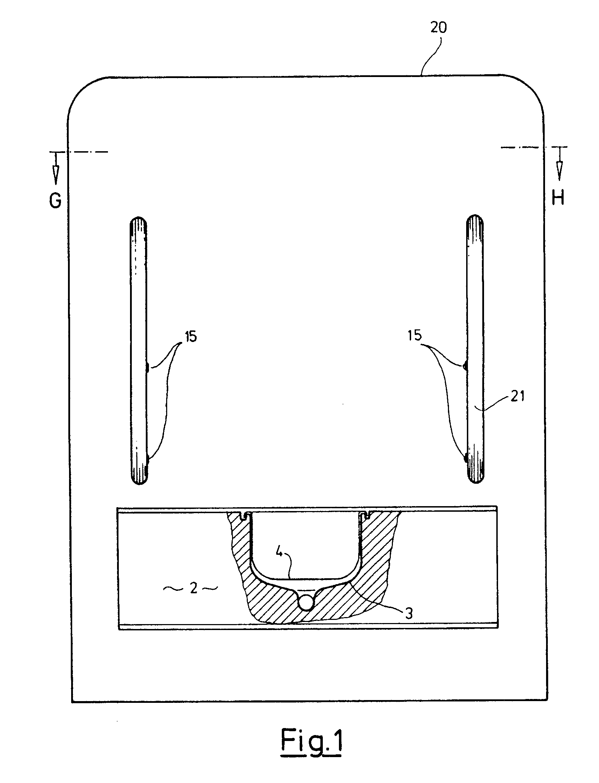

Gemäß Figur 1 ist einer Kabine 20 ein Drehsitz 2 mit Vertiefungen 3 zur Aufnahme von Behältern 4 angeordnet. Der Drehsitz ist um vertikale Achse rotierbar. Diese Rotation und die weiteren Funktionen der Trockentoilette werden die Lichtschranken 15 ausgelöst, die an seitlichen Blenden 21 angebracht sind.

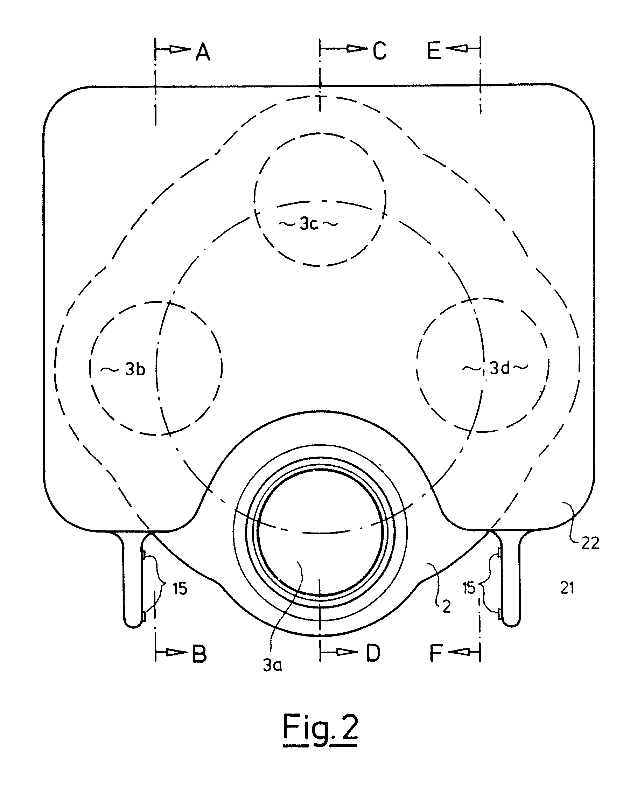

Die Figur 2 zeigt in einer Draufsicht den rotierbaren Drehsitz 2 mit vier Vertiefungen 3, der teilweise unterhalb einer Abdeckplatte 22 angeordnet ist. Die Vertiefungen befinden sich in der Benutzungsposition 3a, in der Position 3b, in der die Deckel abgegeben werden, in der Entnahmeposition 3c und die der Position 3d, in der jeweils ein neuer Behälter eingelegt wird. Die Abdeckplatte 22 weist in der Benutzungsposition einen etwa halbkreisförmigen Ausschnitt und in der Position 3b, 3c

und 3d entsprechende Durchbrüche auf, die die genannten Funktionen ermöglichen.

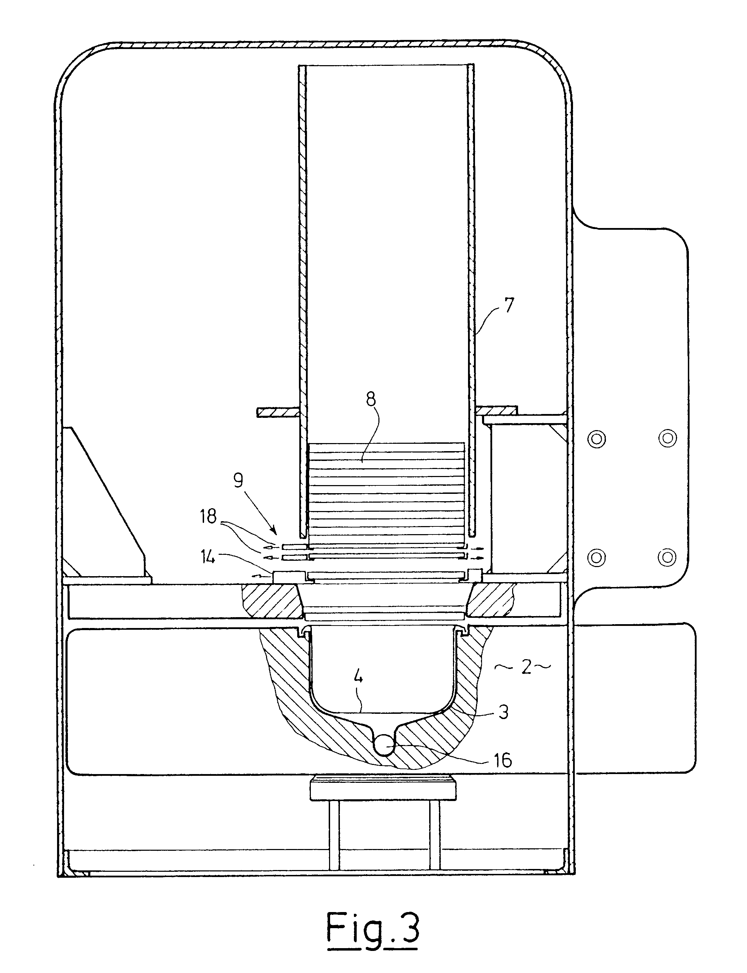

In Figur 3 ist das Magazin 7 zur Aufnahme der Deckel 8 dargestellt, das mit einer Einrichtung 9 zur Abgabe einzelner Deckel ausgestattet ist. Die Einrichtung 9 umfaßt einen Träger 14, der in seiner Halteposition den untersten Deckel trägt. Der Träger 14 ist nach außen bewegbar und gibt dann einen Deckel frei. Durch weitere verschiebbare Halter 18 wird sichergestellt, daß jeweils nur ein Deckel zum Verschließen des Behälters 4 abgegeben wird. Die Vertiefung 3 weist unten eine Abflußöffnung 16 auf.

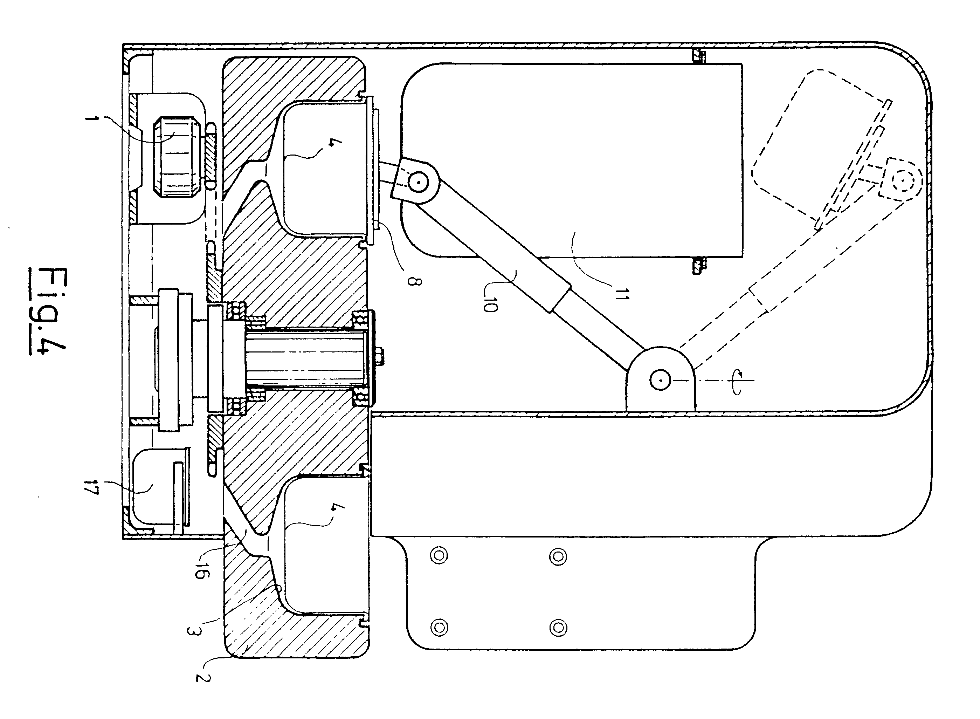

Figur 4 zeigt wiederum den Drehsitz 2, dessen Rotation von einer Antriebsvorrichtung 1, z.B. einem mit einem Getriebe ausgestatteten Elektromotor, bewirkt wird. Eine Roboterarm 10 entnimmt den mit einem Deckel 8 verschlossenen Behälter 4 und führt ihn einer Ablage 11 zu. Die für Störungsfälle vorgesehene Abflußöffnung 16 mündet in einen Auffangbehälter 17.

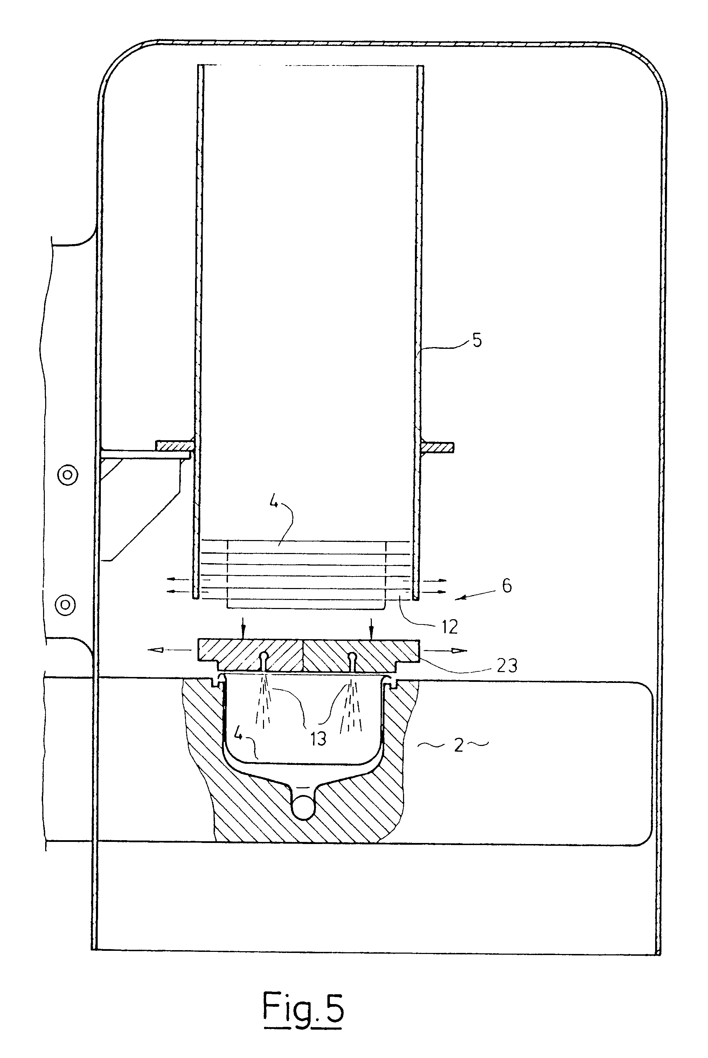

In Figur 5 ist das Magazin 5 zur Aufnahme eines Vorrats von Behältern 4 dargestellt. Die Behälter sind mit einem festen Kragen ausgestattete Folienbeutel, die zusammengefaltet im Magazin gestapelt sind. Eine Einrichtung 6 zur Abgabe einzelner Behälter umfaßt Träger 12, die unter den Kragen des untersten Behälters greifen, sowie eine in Teilen nach außen bewegbare Platte 23. Die Platte 23 weist eine Blasvorrichtung 13 auf, durch die eine Entfaltung des eingelegten Behälters bewirkt wird.

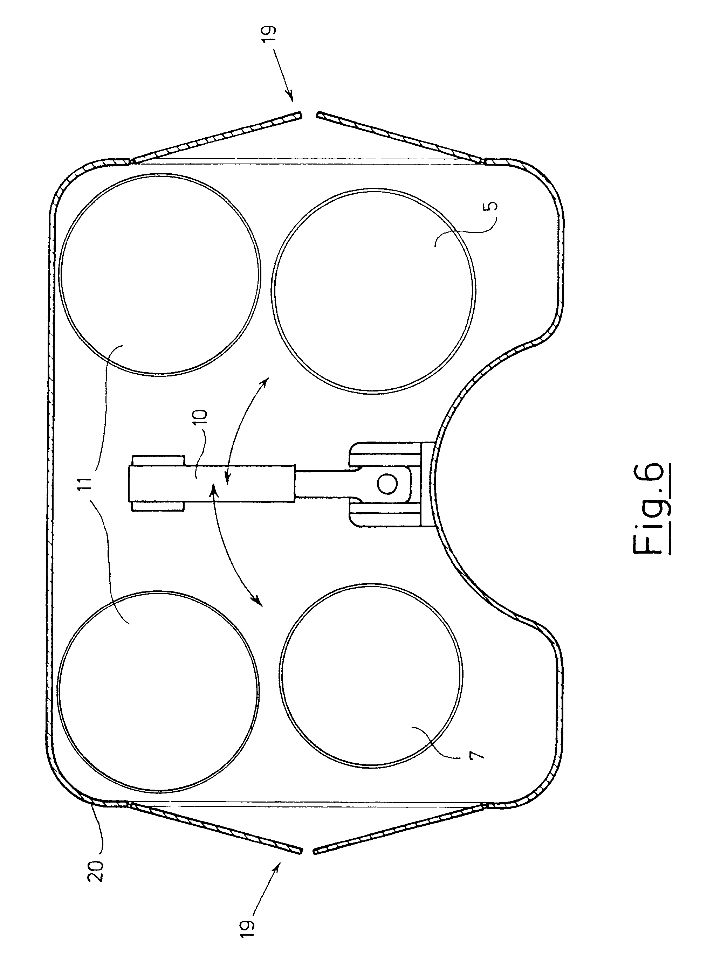

Die Figur 6 zeigt in geschnittener Darstellung die Anordnung der Magazine 5 und 7, des Roboterarm 10, sowie zweier Ablagen 11. Die Kabine 20 weist seitlich Türen 19 auf, die die Nachfüllung der Magazine und die Entsorgung der Ablagen ermöglichen.

Die Funktion der Trockentoilette läßt sich folgendermaßen beschreiben:
Nach der Benutzung wird durch die Lichtschranken 15 eine Rotation des Drehsitzes 2 im Uhrzeigersinn um 90° ausgelöst. Der benutzte Behälter kommt damit in die Position 3b gemäß Figur 2. Dort wird ein Deckel 8 aufgelegt. Die Deckel sind vorteilhaft so gestaltet, daß sie dichtschließend um den festen Kragen der Behälter greifen. Ggfls. kann eine Vorrichtung vorgesehen werden, die den Deckel fest aufdrückt. Dies kann auch durch den Roboterarm 10 bewirkt werden, bevor dieser den Behälter entnimmt.

Durch die Rotation ist der zuvor verschlossene Behälter in die Position 3c gemäß Figur 2 gelangt. Hier tritt der Roboterarm 10 in Funktion und übergibt den Behälter der Ablage 11. Durch die Rotation rückt weiterhin jeweils eine leere Vertiefung 3 in die Position 3d, in der ein neuer Behälter 4 eingelegt wird. Dieser gelangt durch die folgende Rotation um 90˚ in die Benutzungsposition 3a.

Die Trockentoilette gewährleistet einen sauberen und hygienischen Betrieb, ohne daß der Benutzer zur Entsorgung der Fäkalien und zur Nachfüllung eines neuen Behälters unangenehme Handgriffe ausführen muß. Die automatische Arbeitsweise stellt sicher, daß jeder Benutzer eine gebrauchs- fertige Toilette vorfindet.

## Ansprüche

1. Trockentoilette zur Verwendung mit verschließbaren Behältern zur Aufnahme der Fäkalien, gekennzeichnet durch einen mittels einer Antriebsvorrichtung (1) um eine vertikale Achse schrittweise jeweils um 360/n Grad rotierbaren Drehsitz (2) mit n Vertiefungen (3) zur Aufnahme jeweils eines Behälters (4), wobei mindestens und vorzugsweise n = 4 ist und die Vertiefungen in den Ruhepositionen des Drehsitzes, nacheinander folgende Positionen einnehmen:
   - eine erste Position, in der ein erstes Magazin zur Aufnahme eines Vorrats an unbenutzten Behältern (4) vorgesehen ist, das mit einer Einrichtung (6) zur Abgabe einzelner Behälter (4) ausgestattet ist,
   - eine zweite Position, die als Benutzungsposition dient,
   - eine dritte Position, in der ein zweites Magazin (7) zur Aufnahme eines Vorrats von Deckeln (8) zum Verschließen der benutzten Behälter vorgesehen ist, das mit einer Einrichtung (9) zur Abgabe einzelner Deckel ausgestattet ist, und
   - eine vierte Position, die als Entnahmeposition dient und in der ein Roboterarm (10) vorgesehen ist, der nach Auflegen eines Deckels auf den benutzten Behälter den verschlossenen Behälter der Vertiefung entnimmt und einer Ablage (11) zuführt.

2. Trockentoilette nach Anspruch 1, dadurch gekennzeichnet, daß die Einrichtung (6) zur Abgabe einzelner Behälter (4) ein Träger (12) ist, der geeignet ist, in einer Halteposition den untersten Behälter des in dem Magazin (5) befindlichen Vorrats von Behältern zu tragen, aus dieser Position in eine Freigabeposition bewegbar und nach Freigabe eines Behälters zurück in die Halteposition bewegbar ist.

3. Trockentoilette nach Anspruch 1 oder 2, gekennzeichnet durch eine Blasvorrichtung (13), die nach Abgabe eines aus einem mit einem festen Kragen ausgestatteten, zusammengelegten Schlauchbeutel bestehenden Behälters den Schlauchbeutel durch Aufblasen entfaltet.

4. Trockentoilette nach einem der Ansprüche 1 bis 3, dadurch gekennzeichnet, daß die Einrichtung (9) zur Abgabe einzelner Deckel (8) ein Träger (14) ist, der geeignet ist, in einer Halteposition den untersten Deckel des in dem Magazin (7) befindlichen Vorrats von Deckeln zu tragen, aus dieser Position in eine Freigabeposition bewegbar und nach Freigabe eines Deckels zurück in die Halteposition bewegbar ist.

5. Trockentoilette nach einem der Ansprüche 1 bis 4, gekennzeichnet durch eine Lichtschranke (15) oder eine Sensoreinrichtung, die in Verbindung mit einer Schaltung nach der Benutzung eine Rotation des Drehsitzes (2) um 360/n Grad, die Abgabe eines neuen Behälters und eines Deckels sowie die Entnahme des benutzten Behälters durch den Roboterarm (10) auslöst.

6. Trockentoilette nach einem der Ansprüche 1 bis 5, gekennzeichnet durch eine Abflußöffnung (16) der Vertiefungen (3), die in der Benutzungsposition in einen Auffangbehälter (17) mündet.

7. Trockentoilette nach einem der Ansprüche 1 bis 6, gekennzeichnet durch eine Preßeinrichtung, die in der Ablage (11) eine Komprimierung des gesammelten Abfalls ermöglicht.

Fig.1

Fig.2

# Fig.3

_Fig.4_

Fig.5

EP 0 432 643 A1

Fig.6

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 703 633 (J. FABORSKY) <br> * Seite 1, Absatz 3 - Seite 2, Absatz 1; Seite 4, Absatz 2 - Seite 5, Absatz 2; Figuren 2,4 * <br> − − − | 1 | A 47 K 11 02 |
| A | EP-A-0 199 682 (COOPERATIVA MURATORI E CEMENTISTI) <br> − − − | | |
| A,D | DE-C-8 809 20 (E.H. POSEY) <br> − − − | | |
| A | US-A-3 723 999 (M. MILLER) <br> − − − − − | | |

| | RECHERCHIERTE SACHGEBIETE (Int. Cl.5) |
|---|---|
| | A 47 K <br> E 03 D <br> B 63 B |

Der vorliegende Recherchenbericht wurde für alle Patentansprüche erstellt

| Recherchenort | Abschlußdatum der Recherche | Prüfer |
|---|---|---|
| Den Haag | 12 März 91 | KAPPOS A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument